# EUROPÄISCHE PATENTSCHRIFT

(11) **EP 2 311 176 B1**
(45) Veröffentlichungstag und Bekanntmachung des Hinweises auf die Patenterteilung: **29.04.2015**
(21) Anmeldenummer: 09776047.4
(22) Anmeldetag: 05.08.2009
(51) Int. Cl.: H02M 1/32, H02H 5/10, H02H 7/12, B60L 3/04, B60L 3/00

(54) **VORRICHTUNG ZUM SCHUTZ EINES GLEICHSPANNUNGSWANDLERS**
APPARATUS FOR PROTECTING A DC VOLTAGE CONVERTER
DISPOSITIF DE PROTECTION D'UN CONVERTISSEUR DE TENSION CONTINUE

(30) Priorität: 13.08.2008 DE 102008038847
(43) Veröffentlichungstag der Anmeldung: 20.04.2011
(73) Patentinhaber: Conti Temic Microelectronic GmbH, 90411 Nürnberg (DE)
(72) Erfinder: HOFMANN, Michael, 85579 Neubiberg (DE); SCHIRMER, Edmund, 90409 Nürnberg (DE); MÜHLENBROCK, Peter, 90427 Nürnberg (DE); BERG, Wilhelm, 90409 Nürnberg (DE); KOLLENDA, Gerald, 91466 Gerhardshofen (DE)
(74) Vertreter: Bonn, Roman Klemens
(86) Internationale Anmeldenummer: PCT/DE2009/001082
(87) Internationale Veröffentlichungsnummer: WO 2010/017803

(56) Entgegenhaltungen:
- US-A1- 2008 150 505

## Beschreibung

Die Erfindung betrifft eine Vorrichtung zum Schutz eines Gleichspannungswandlers gemäß dem Oberbegriff des Anspruchs 1.

Aus dem Stand der Technik sind verschiedene Topologien von Gleichspannungswandlern bekannt. Dabei kann der Gleichspannungswandler ein oder mehrere Leistungsendstufen sowie eine Einheit zur Steuerung und/oder Regelung des Gleichspannungswandlers umfassen, wobei die Leistungsendstufen und die Einheit einen gemeinsamen Massepunkt, beispielsweise eine Fahrzeugkarosserie, aufweisen. Bspw. offenbart eine Druckschrift US 2008/150505 A1 einen derartigen Gleichspannungswandler.

Nachteilig dabei ist jedoch, dass bei bestimmten Betriebszuständen ein Betriebsstrom der Leistungsendstufen über elektrische Kabelverbindungen der Einheit oder über Kabelabschirmungen fließen kann. Da diese Kabelverbindungen im Allgemeinen nicht für derartig große elektrische Ströme vorgesehen sind, kann es durch die große Belastung zu Schädigungen oder zur Zerstörung der Kabelverbindungen oder von in diesen Bereichen angeordneten elektrischen Bauelementen kommen. Die Betriebszustände sind beispielsweise durch eine hochohmige Masseanbindung der Leistungsendstufen gekennzeichnet, welche z. B. durch Korrosion und/oder Verlust eines Massebandes hervorgerufen wird.

Der Erfindung liegt daher die Aufgabe zugrunde, eine geeignete Vorrichtung zum Schutz eines Gleichspannungswandlers anzugeben, mittels welcher insbesondere die im Stand der Technik angegebenen Nachteile überwunden werden.

Die Aufgabe wird erfindungsgemäß durch eine Vorrichtung gelöst, welche die im Anspruch 1 angegebenen Merkmale aufweist.

Vorteilhafte Ausgestaltungen der Erfindung sind Gegenstand der Untersprüche.

Die erfindungsgemäße Vorrichtung zum Schutz eines Gleichspannungswandlers umfasst eine oder mehrere Leistungsendstufen sowie eine Steuer- und Regeleinheit mit einer Signalmasseleitung, welche ein gemeinsames Massepotenzial aufweisen. Erfindungsgemäß ist ein Schalter zur elektrischen Trennung der Signalmasseleitung vorgesehen, wobei der Schalter dann geöffnet ist, wenn der Gleichspannungswandler aktiv ist und der Schalter dann geschlossen ist, wenn der Gleichspannungswandler inaktiv ist.

Durch diesen Schalter ist es möglich, elektrische Leitungen der Vorrichtung und in dieser angeordnete elektrische und/oder elektronische Bauelemente vor einer zu großen Strombelastung zu schützen und somit eine Lebensdauer dieser zu erhöhen.

Alternativ oder zusätzlich umfasst die Vorrichtung einen Messverstärker, welcher zu einer Ermittlung einer Spannungsdifferenz zwischen dem gemeinsamen Massepotenzial des Gleichspannungswandlers und der Fahrzeugmasse vorgesehen ist. Für die dabei ermittelte Spannungsdifferenz ist ein Grenzwert vorgebbar, wobei gemäß einer Weiterbildung der Erfindung bei Erreichen oder Überschreiten des Grenzwertes der Gleichspannungswandler abschaltbar oder in einen definierten Zustand versetzbar ist. Dadurch ist ein weiter verbesserter Schutz der Vorrichtung, deren elektrischer Leiter und Bauelemente vor einer zu hohen Strombelastung sichergestellt.

Ausführungsbeispiele der Erfindung werden im Folgenden anhand von Zeichnungen näher erläutert.

Dabei zeigen:
- Fig. 1: schematisch eine Vorrichtung zur Steuerung / Regelung eines Gleichspannungswandlers nach dem Stand der Technik,
- Fig. 2: schematisch die Vorrichtung gemäß Figur 1 mit einem in einer Signalmasseleitung angeordneten Schalter,
- Fig. 3A: schematisch ein erstes Ausführungsbeispiel des Schalters gemäß Figur 2,
- Fig. 3B: schematisch ein zweites Ausführungsbeispiel des Schalters gemäß Figur 2,
- Fig. 4: schematisch die Vorrichtung gemäß Figur 2 und ein erstes Ausführungsbeispiel einer Erfassungseinheit zur Ermittlung einer Spannungsdifferenz, und
- Fig. 5: schematisch die Vorrichtung gemäß Figur 2 und ein zweites Ausführungsbeispiel einer Erfassungseinheit zur Ermittlung einer Spannungsdifferenz.

Einander entsprechende Teile sind in allen Figuren mit den gleichen Bezugszeichen versehen.

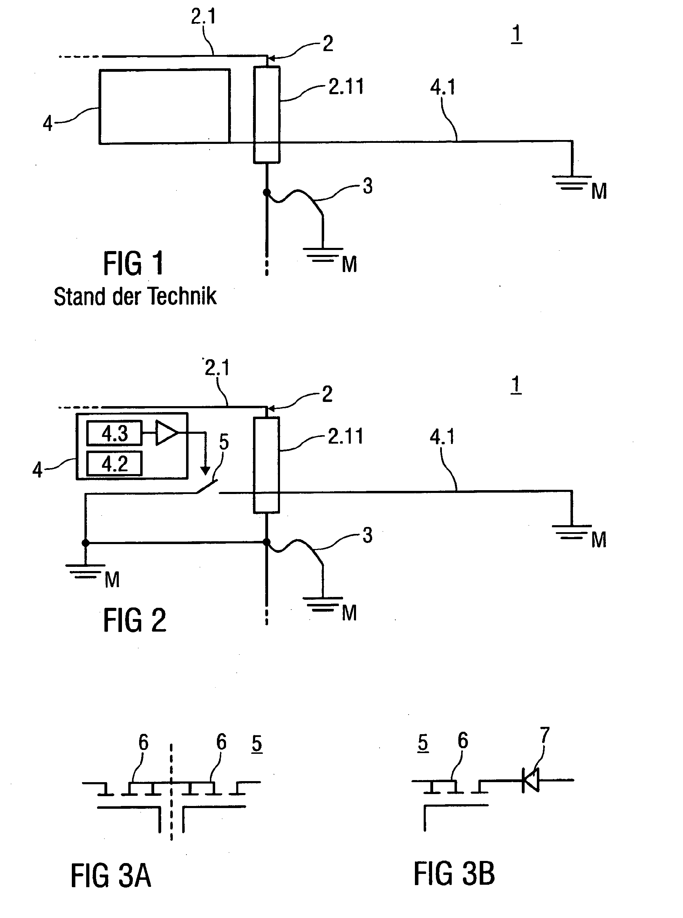

In Figur 1 ist ein Anschlusskonzept 1 für Signal- und Leistungsmasse eines Gleichspannungswandlers 2 gemäß dem Stand der Technik dargestellt. Der Gleichspannungswandler 2 ist dabei insbesondere als bidirektionaler Gleichspannungswandler 2, eventuell auch als unidirektionaler Wandler, ausgeführt, welcher gemäß einer nicht näher dargestellten Weiterbildung der Erfindung eine Niedrigvolt-Endstufe und eine Hochvolt-Endstufe sowie ggf. weitere Bauteile wie Transformator, Drosseln, Kondensatoren etc. umfasst.

Der Gleichspannungswandler 2 ist insbesondere in einem nicht näher dargestellten Fahrzeug, beispielsweise einem Fahrzeug mit Elektroantrieb, mit Hybridantrieb oder einem Brennstoffzellenfahrzeug, zur Wandlung von verschiedenen Gleichspannungen vorgesehen. Weiterhin ist auch eine Anwendung des Gleichspannungswandlers 2 in allen anderen denkbaren mobilen und immobilen elektrischen Anlagen möglich. Dabei kann es sich beispielsweise um Anlagen und Fahrzeuge in der Eisenbahntechnik, der Schifffahrt oder der Luft- und Raumfahrttechnik handeln.

Um elektrische Verbraucher vor elektromagnetischen Einkopplungen der Hochvolt-Endstufe zu schützen, sind die elektrischen Leitungen der Hochvoltendstufe, beispielsweise Kabelverbindungen, vorzugsweise mit einer Abschirmung versehen, d. h. beispielsweise als geschirmtes Kabel ausgeführt.

Der Gleichspannungswandler 2 umfasst weiterhin eine Einheit 4, welche zur Steuerung / Regelung des Gleichspannungswandlers 2, insbesondere von dessen Leistungsendstufen, vorgesehen ist. Diese Steuereinheit 4 umfasst neben nicht näher dargestellten Signal- und/oder Kommunikationsleitungen eine Signalmasseleitung 4.1, welche mittels einer Signalanschluss-Durchführung 2.11 durch ein Gehäuse 2.1 des Gleichspannungswandlers 2 geführt ist.

Sowohl die Niedervolt-Endstufe als auch die Regel- und Steuereinheit weisen einen gemeinsamen elektrischen Masseanschluss auf, welcher im Folgenden als Leistungsmasse 3 bezeichnet wird. Diese Leistungsmasse 3 ist beispielsweise als Flachkabel, Rundkabel oder Masseband ausgeführt oder das Massepotenzial ist direkt auf das Gehäuse 2.1 des Gleichspannungsrichters 2 gelegt.

Die Signalmasseleitung 4.1 und die Leistungsmasse 3 sind mit einem gemeinsamen Massepotenzial M elektrisch verbunden. Dieses Massepotenzial M kann beispielsweise eine metallische Fahrzeugkarosserie sein, welche als Rückleiter für einen elektrischen Betriebsstrom der Leistungsendstufen und für einen Signalstrom der Steuereinheit nutzbar ist. Auch die Abschirmung von Anschlusskabein und -leitungen ist mit dem Massepotenzial M elektrisch verbunden.

Nachteilig ist jedoch, dass bei einer hochohmigen Verbindung der Leistungsmasse 3 mit dem Massepotenzial M, beispielsweise bei einer Korrosion oder einer gelösten Befestigung, der Betriebsstrom der Leistungsmasse 3 über die Signalmasseleitung 4.1 oder die Abschirmung der Hochvoltendstufe zurückgeführt wird. Hierbei kann es neben einer Beeinträchtigung eines Betriebes der Steuer- und Regeleinheit 4 und somit des Gleichspannungswandlers 2 im schlimmsten Fall zu einer Beschädigung oder Zerstörung der Signalmasseleitung 4.1 oder der Abschirmung kommen, da deren Leiterquerschnitt nicht für eine elektrischen Belastung mit dem Betriebsstrom der Leistungsendstufen ausgelegt sind.

In Figur 2 ist die Vorrichtung 1 gemäß Figur 1 dargestellt, wobei erfindungsgemäß ein Schalter 5 zur elektrischen Trennung der Signalmasseleitung 4.1 vorgesehen ist.

Der Schalter 5 ist dann geschlossen, wenn die Leistungsendstufen des Gleichspannungswandlers 2 nicht angesteuert werden, d. h. wenn keine Energieübertragung stattfindet. Dies ist beispielsweise in einem Ruhezustand (= Standby-Modus) oder bei einem Software-Download der Fall. Im Folgenden wird dieser Zustand als inaktiver Zustand des Gleichspannungswandlers 2 bezeichnet.

Die Steuereinheit 4 ist dabei über die Signalmasseleitung 4.1 mit dem Massepotenzial M elektrischen verbunden, unabhängig davon, ob der Gleichspannungswandler 2 mit dem Massepotenzial M verbunden ist. Die Steuer-/Regeleinheit 4 umfasst zumindest ein Bauelement 4.2 zur Steuerung / Regelung des Gleichspannungswandlers 2 und zumindest ein weiteres Bauelement 4.3, beispielsweise einen Mikrocontroller, ein Schaltwerk oder eine andere geeignete Vorrichtung, zur Steuerung des Schalters 5.

Vor einer Ansteuerung der Leistungsendstufen, d. h. vor einer Aktivierung des Gleichspannungswandlers 2, wird der Schalter 5 geöffnet, so dass die Signalmasseleitung 4.1 von dem gemeinsamen Massepotenzial M des Gleichspannungswandlers elektrisch getrennt ist. Daraus resultiert der Vorteil, dass bei einer hochohmigen Leistungsmasse 3 eine Leitung des Betriebsstromes der Leistungsendstufen nicht über die Signalmasseleitung 4.1 stattfinden kann und somit diese und an dieser angeordnete elektrische Bauelemente, wie beispielsweise die Steuer-/Regeleinheit 4, vor einer Beaufschlagung mit dem Betriebsstrom geschützt sind.

Die Figuren 3A und 3B zeigen zwei mögliche Ausführungsformen des Schalters 5, wobei dieser in einer ersten Ausführungsform aus zwei elektrisch antiseriell verschalteten Transistoren 6, beispielsweise MOS-Transistoren, oder in einem zweiten Ausführungsbeispiel aus einer Reihenschaltung eines einzelnen Transistors 6 und einer Diode 7 mit geeigneter Polung gebildet ist. In weiteren nicht näher dargestellten Ausführungsbeispielen der Erfindung ist der Schalter 5 auch durch elektrische oder elektronische Elemente, beispielsweise ein Relais, realisierbar.

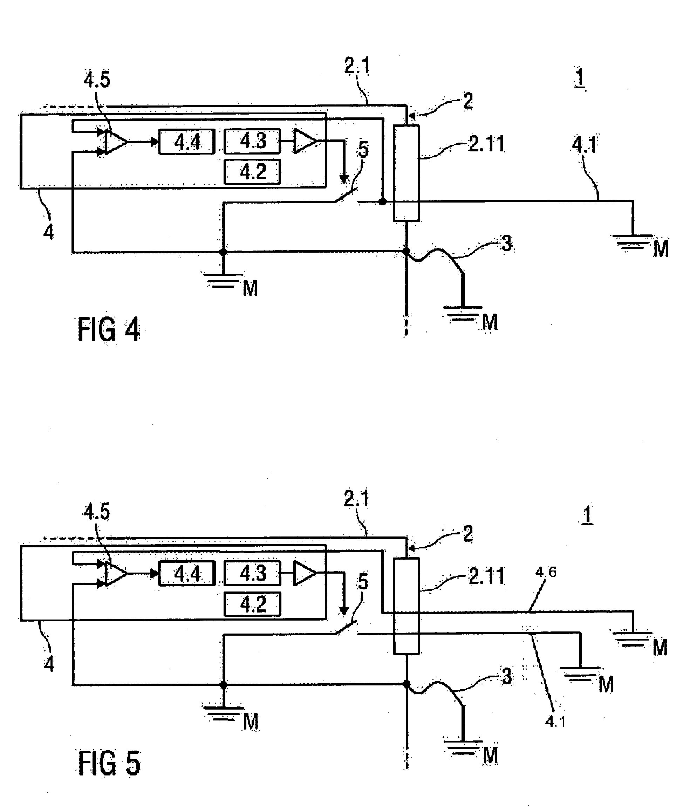

In Figur 4 ist die Vorrichtung gemäß Figur 2 dargestellt, wobei die Steuereinheit 4 eine Erfassungseinheit 4.4 und einen Messverstärker 4.5 zur Ermittlung der Spannungsdifferenz zwischen dem gemeinsamen Massepotenzial M des Gleichspannungswandlers 2 und der Masse 4.1 umfasst.

Dadurch ist es in vorteilhafter Weise möglich, zusätzlich einen Rückfluss des Betriebsstromes über die Abschirmung der elektrischen Leitungen des Hochvolt-Anschlusses oder über nach dem zugrunde liegenden Konstruktionsgedanken nicht dafür vorgesehene Strompfade zu vermeiden und somit eine Schädigung oder Zerstörung dieser zu verhindern.

Im geöffneten Zustand des Schalters 5, d. h. der Gleichspannungswandler 2 ist aktiviert, ist mittels des Messverstärkers 4.5 ein Potentialunterschied zwischen der Masse 4.1 und dem gemeinsamen Massepotenzial M des Gleichspannungswandlers 2 ermittelbar und der Erfassungseinheit 4.4 zuführbar. Da die Signalmasseleitung 4.1 aufgrund des geöffneten Schalters 5 praktisch stromlos ist, tritt zwischen dieser und dem Massepotenzial M des Fahrzeugs nur ein vernachlässigbar geringer Spannungsabfall auf.

Bei Verwendung der Fahrzeugkarosserie als gemeinsames Massepotenzial M ist ein Spannungsabfall auf der Karosserie selbst aufgrund eines gegenüber allen anderen elektrischen Leitungen großen Leitungsquerschnittes und eines flächigen Aufbaus vernachlässigbar klein.

Bei einer niederohmigen elektrischen Verbindung über die Leistungsmasse 3 ist der ermittelte Potentialunterschied zwischen der Fahrzeugmasse und der Masse des Gleichspannungswandlers sehr gering.

Je hochohmiger diese elektrische Verbindung ist, beispielsweise hervorgerufen durch Korrosion, Verlust eines Massebandes oder eines gelösten Befestigungsmittels, desto größer ist der erfasste Spannungswert. In einem Grenzfall, wenn keine elektrische Verbindung zwischen der Masse des Gleichspannungswandlers über die Leistungsmasse 3 zum Massepotenzial M des Fahrzeugs mehr besteht, kann die Rückführung des Betriebsstromes der Leistungsendstufen nur über die Abschirmung der elektrischen Leitungen des Hochvolt-Anschlusses oder über nach dem zugrunde liegenden Konstruktionsgedanken nicht dafür vorgesehene Strompfade erfolgen, da der Schalter 5 in der Signalmasseleitung 4.1 geöffnet ist. Dabei ist eine sehr deutliche Spannungsdifferenz über den Messverstärker 4.5 messbar.

Durch die Festlegung eines Grenzwertes, welcher beispielsweise in Abhängigkeit von einer Verkabelungstopologie in dem Fahrzeug einstellbar ist, lässt sich ein eindeutiges Kriterium für die Detektion eines Fehlers in der elektrischen Verbindung der Leistungsmasse 3 angeben.

Bei Überschreitung dieses Grenzwertes ist der Gleichspannungswandler 2 in vorteilhafter Weise, insbesondere aufgrund eines von der Erfassungseinheit 4.4 generierten Signals, abschaltbar oder in einen definierten Zustand versetzbar, so dass der Betriebsstrom-Rückfluss über die Abschirmung innerhalb zulässiger Grenzen gehalten werden oder ganz abgeschaltet werden kann.

Figur 5 zeigt die Vorrichtung 1 gemäß Figur 4, wobei zur Messung des elektrischen Massepotenzials M hier eine gesonderte Messleitung 4.6 vorgesehen ist. Diese kann eine speziell für diesen Zweck vorgesehene Leitung sein oder auch eine bereits vorhandene Masseleitung (z. B. KI. 31).

Mittels der erfindungsgemäßen Vorrichtung 1 ist es zusammenfassend möglich, sowohl die Signalmasseleitung 4.1 als auch die Abschirmung der elektrischen Leiter und andere Masseverbindungen mit geringem Leiterquerschnitt wirkungsvoll vor zu hohen Strömen zu schützen und eine Qualität der elektrischen Verbindung der Masse des Gleichspannungswandlers über die Leistungsmasse 3 mit dem Massepotenzial M des Fahrzeugs zu überwachen.

### Bezugszeichenliste

- 1: Vorrichtung
- 2: Gleichspannungswandler
- 2.1: Gehäuse
- 2.11: Signalanschlussdurchführung
- 3: Leistungsmasse
- 4: Steuereinheit
- 4.1: Signalmasseleitung
- 4.2: Bauelement
- 4.3: Bauelement
- 4.4: Erfassungseinheit
- 4.5: Messverstärker
- 4.6: Messleitung
- 6: Transistor
- 7: Diode

- M: Massepotenzial

## Patentansprüche

1. Vorrichtung (1) zur Steuerung / Regelung eines Gleichspannungswandlers (2), umfassend eine oder mehrere Leistungsendstufen sowie eine Steuereinheit (4) mit einer Signalmasseleitung (4.1), welche ein gemeinsames Massepotenzial (M) aufweisen,
**dadurch gekennzeichnet, dass** ein Schalter (5) zur elektrischen Trennung der Signalmasseleitung (4.1) von dem gemeinsamen Massepotenzial (M) vorgesehen ist, wobei der Schalter (5) dann geöffnet ist,
wenn der Gleichspannungswandler (2) aktiv ist und der Schalter (5) dann geschlossen ist, wenn der Gleichspannungswandler (2) inaktiv ist.

2. Vorrichtung (1) nach Anspruch 1,
**dadurch gekennzeichnet, dass** die Steuer-/Regeleinheit (4) Bauelemente (4.2, 4.3) zur Steuerung / Regelung des Gleichspannungswandlers (2) und des Schalters (5) umfasst.

3. Vorrichtung (1) nach Anspruch 1 oder 2,
**dadurch gekennzeichnet, dass** die Steuer- und Regeleinheit (4) über die Signalmasseleitung (4.1) mit dem gemeinsamen Massepotenzial (M) elektrisch verbunden ist.

4. Vorrichtung (1) nach einem der Ansprüche 1 bis 3,
**dadurch gekennzeichnet, dass** die Steuer- und Regeleinheit (4) eine Erfassungseinheit (4.4) und einen Messverstärker (4.5) zur Ermittlung der Spannungsdifferenz zwischen dem gemeinsamen Massepotenzial (M) des Gleichspannungswandlers 2 und der Fahrzeugmasse die an der Leistungsmasse (3) abfällt.

5. Vorrichtung (1) nach Anspruch 4,
**dadurch gekennzeichnet, dass** für die ermittelte Spannungsdifferenz ein Grenzwert vorgebbar ist, der wahlweise dynamisch nachgeführt werden oder auch konstant bleiben kann.

6. Vorrichtung (1) nach Anspruch 5,
**dadurch gekennzeichnet, dass** bei Erreichen oder Überschreiten des Grenzwertes der Gleichspannungswandler (2) abschaltbar oder in einen definierten Zustand versetzbar ist.

7. Vorrichtung (1) nach einem der Ansprüche 1 bis 6,
**dadurch gekennzeichnet, dass** der Gleichspannungswandler (2) vorzugsweise ein bidirektionaler oder auch ein unidirektionaler Gleichspannungswandler ist.

8. Vorrichtung (1) nach einem der Ansprüche 1 bis 7,
**dadurch gekennzeichnet, dass** der Gleichspannungswandler (2) eine Niedrigvolt-Leistungsendstufe und eine Hochvolt-Leistungsendstufe umfasst.

9. Vorrichtung (1) nach einem der Ansprüche 1 bis 8,
**dadurch gekennzeichnet, dass** der Gleichspannungswandler (2) in einem Fahrzeug, insbesondere in einem Fahrzeug mit Elektroantrieb, einem Fahrzeug mit Hybridantrieb oder in einem Brennstoffzellenfahrzeug angeordnet ist.

## Claims

1. Apparatus (1) for controlling/regulating a DC-to-DC converter (2), comprising one or more power output stages and a control unit (4) having a signal earth line (4.1), which have a common earth potential (M), **characterized in that** a switch (5) is provided for electrically isolating the signal earth line (4.1) from the common earth potential (M), wherein the switch (5) is open when the DC-to-DC converter (2) is active, and the switch (5) is closed when the DC-to-DC converter (2) is inactive.

2. Apparatus (1) according to Claim 1, **characterized in that** the control/regulation unit (4) comprises components (4.2, 4.3) for controlling/regulating the DC-to-DC converter (2) and the switch (5).

3. Apparatus (1) according to Claim 1 or 2, **characterized in that** the control and regulation unit (4) is electrically connected to the common earth potential (M) via the signal earth line (4.1).

4. Apparatus (1) according to one of Claims 1 to 3, **characterized in that** the control and regulation unit (4) comprises a detection unit (4.4) and an instrument amplifier (4.5) for determining the voltage difference between the common earth potential (M) of the DC-to-DC converter (2) and the vehicle earth at the power earth (3).

5. Apparatus (1) according to Claim 4, **characterized in that** a limit value is presettable for the determined voltage difference, which limit value can either be tracked dynamically or else can remain constant.

6. Apparatus (1) according to Claim 5, **characterized in that**, when the limit value is reached or exceeded, the DC-to-DC converter (2) is disconnectable or is settable to a defined state.

7. Apparatus (1) according to one of Claims 1 to 6, **characterized in that** the DC-to-DC converter (2) is preferably a bidirectional or else unidirectional DC-to-DC converter.

8. Apparatus (1) according to one of Claims 1 to 7, **characterized in that** the DC-to-DC converter (2) comprises a low-voltage power output stage and a high-voltage power output stage.

9. Apparatus (1) according to one of Claims 1 to 8, **characterized in that** the DC-to-DC converter (2) is arranged in a vehicle, in particular in a vehicle with an electric drive, a vehicle with a hybrid drive or in a fuel cell vehicle.

## Revendications

1. Dispositif (1) permettant de commander ou régler un convertisseur de tension continue (2), comportant un ou plusieurs étages de sortie de puissance, ainsi qu'une unité de commande (4) avec un câble de terre pour signaux (4.1), qui comportent un potentiel de masse (M) commun,
**caractérisé en ce qu'**un commutateur (5) est prévu pour la séparation électrique entre le câble de terre pour signaux (4.1) et le potentiel de masse (M) commun, ledit commutateur (5) étant ouvert lorsque le convertisseur de tension continue (2) est actif, et ledit commutateur (5) étant fermé lorsque le convertisseur de tension continue (2) est inactif.

2. Dispositif (1) selon la revendication 1, **caractérisé en ce que** l'unité de commande et de réglage (4) comporte des composants (4.2, 4.3) permettant de commander et/ou régler le convertisseur de tension continue (2) et le commutateur (5).

3. Dispositif (1) selon les revendications 1 ou 2, **caractérisé en ce que** l'unité de commande et de réglage (4) est reliée électriquement au potentiel de masse (M) commun par l'intermédiaire du câble de terre pour signaux (4.1).

4. Dispositif (1) selon l'une quelconque des revendications 1 à 3, **caractérisé en ce que** l'unité de commande et de réglage (4) comporte une unité de détection (4.4) et un amplificateur de mesure (4.5) pour déterminer une différence de tension entre le potentiel de masse (M) commun du convertisseur de tension continue (2) et la masse du véhicule qui chute au niveau de la puissance massique (3).

5. Dispositif (1) selon la revendication 4, **caractérisé en ce qu'**une valeur limite qui, au choix, peut être corrigée de manière dynamique ou peut aussi rester constante, peut être définie pour la différence de tension calculée.

6. Dispositif (1) selon la revendication 5, **caractérisé en ce que** lorsque la valeur limite est atteinte ou dépassée, le convertisseur de tension continue (2) peut être déconnecté ou peut être amené dans un état défini.

7. Dispositif (1) selon l'une quelconque des revendications 1 à 6, **caractérisé en ce que** le convertisseur de tension continue (2) est, de préférence, un convertisseur de tension continue bidirectionnel mais peut aussi être un convertisseur de tension continue unidirectionnel.

8. Dispositif (1) selon l'une quelconque des revendications 1 à 7, **caractérisé en ce que** le convertisseur de tension continue (2) comporte un étage de sortie de puissance à faible voltage et un étage de sortie de puissance à haut voltage.

9. Dispositif (1) selon l'une quelconque des revendications 1 à 8, **caractérisé en ce que** le convertisseur de tension continue (2) est monté dans un véhicule, en particulier dans un véhicule à moteur électrique, dans un véhicule à moteur hybride ou dans un véhicule avec pile à combustible.
